# EUROPÄISCHE PATENTANMELDUNG

(11) **EP 1 024 295 A1**
(43) Veröffentlichungstag der Anmeldung: **02.08.2000**
(21) Anmeldenummer: 99101472.1
(22) Anmeldetag: 27.01.1999
(51) Int. Cl.: F04D 25/02, H02K 9/06

(54) **Elektromotorischer Antrieb**

(71) Anmelder: SIEMENS AKTIENGESELLSCHAFT, 80333 München (DE)
(72) Erfinder: Diener, Karl Friedrich Dipl.-Ing., 97447 Gerolzhofen (DE); Conraths, Hermann- Josef Dr.-Ing., 91126 Schwabach (DE); Hopf, Werner, 90522 Oberasbach (DE); Lienert, Wolfgang, 90449 Nürnberg (DE); Pittius, Ekkehard Dr.-Ing., 91154 Roth (DE); Seitz, Peter, 91224 Pommelsbrunn (DE)

(57) **Zusammenfassung**

Bei einem eigenbelüfteten Elektromotor (1) soll die Kühlung verbessert werden. Hierzu ist eine elektromagnetische Drehzahlbegrenzungs- und -Regeleinrichtung zwischen der Motorwelle (3) und dem Lüfterrad (2) vorgesehen, wobei das über eine elektromagnetische Schlupfkupplung (6, 10) und von der Motordrehzahl abhängig angetriebene Lüfterrad frei drehbar am Motorgehäuse bzw. am Motorlagerschild (5) gelagert ist.

## Beschreibung

Die Erfindung betrifft einen elektromotorischen Antrieb, mit wenigstens einem von einem Elektromotor antreibbaren Lüfterrad, wobei eine von der Motordrehzahl abhängige elektromagnetische Schlupfkupplung zwischen der Motorwelle und dem frei drehbar gelagerten Lüfterrad angeordnet ist.

Elektromotoren für Schienen- und spurgebundene Fahrzeuge, wie Drehstrom-Bahnmotoren, werden in zunehmendem Maße mit hohen Drehzahlen betrieben, um die Motor-Drehmomente und somit das Motorgewicht wie auch die Bauform klein zu halten. Gemäß der EP 0 826 266 B1 ist zur Motorkühlung ein frei drehbar auf der Motorwelle gelagertes Lüfterrad vorgesehen, wobei eine elektromagnetische Drehzahlbegrenzungs- und Regelungseinrichtung zwischen der Motorwelle und dem Lüfterrad gebildet ist, welche die Kühlluftförderung auf die erforderliche Kühlluftmenge begrenzt und wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis beinahe zur Wirkungslosigkeit aufhebbar ist und bei abfallender Motordrehzahl wieder bis auf die volle Mitnahmewirkung zunimmt.

In der älteren deutschen Patentanmeldung 198 01 310.8 ist ein elektromotorischer Antrieb dieser Art beschrieben, wobei die Schlupfkupplung derart ausgebildet ist, daß die Motorwelle Permanentmagnete trägt und in der Nabe des Lüfterrades Segmente ausgespart sind oder daß das Lüfterrad mit Permanentmagneten versehen ist und die Motorwelle über ihren Umfang segmentartige Aussparungen aufweist, derart, daß im Zusammenwirken der segmentierten Lüfterradnabe mit den Permanentmagneten der Motorwelle bzw. im Zusammenwirken der segmentierten Motorwelle mit den Permanentmagneten des Lüfterrades und abhängig von der Motordrehzahl die Drehzahlbegrenzungs- und Regelungseinrichtung wirksam ist. Diese Schlupfkupplung arbeitet nach dem Reluktanzprinzip.

Aufgabe der Erfindung ist es, einen elektromagnetischen Antrieb der beschriebenen Art bezüglich seiner Eigenbelüftung bzw. Motorkühlung durch wenigstens ein vom Motor antreibbares Lüfterrad weiter zu verbessern.

Erfindungsgemäß wird diese Aufgabe durch die Merkmale des Patentanspruches 1 gelöst. Damit wird erreicht, daß die Kühlluftmenge bei niedrigeren Motordrehzahlen in ausreichendem Maße zur Verfügung steht, während die zu fördernde Kühlluftmenge bei höheren oder hohen Motordrehzahlen nicht mehr proportional zur steigenden Motordrehzahl ansteigt. Dadurch, daß das Lüfterrad erfindungsgemäß im Motorgehäuse bzw. am Lagerschild und damit nicht auf der Motorwelle gelagert ist, ergibt sich stets eine ausreichend hohe Lüfterrad-Lagerdrehzahl, auch bei kleiner oder gegen Null gehender Relativdrehzahl der Motorwelle zum Lüfterrad. Dadurch werden ein besseres Laufverhalten und eine verbesserte Lagerschmierung der Lüfterradlagerung erreicht. Während bei der bekannten Lagerung des Lüfterrades auf der Motorwelle durch den dabei rotierenden Lageraußenring und die Fliehkraft das Schmiermittel zum Außenring gedrückt wird und zu einer erhöhten Lagerreibung führt, steht der Lageraußenring der im Motorgehäuse bzw. im Motorlagerschild angeordneten Lagerung des Lüfterrades still, was die Lagerreibung vermindert. Durch die mechanische Entkopplung des Lüfterrades vom Läufer des Elektromotors werden beispielsweise durch eine Läuferunwucht verursachte Lagerbelastungen verringert.

Nach einer Ausführung der Erfindung ist vorgesehen, daß das mit den Permanentmagneten der Motorwelle oder des Lüfterrades die elektromagnetische Schlupfkupplung bildende elektrisch leitende Teil des Lüfterrades oder der Motorwelle aus einer Hülse aus elektrisch leitfähigem Material besteht. Hiernach erübrigt die einfach auszubildende elektrisch leitfähige Hülse, die in der magnetisch leitfähigen Lüfterradnabe sitzt, eine zusätzliche Käfigwicklung. Die einfach herstellbare Hülse besteht vorzugsweise aus Kupfer.

Gemäß einer weiteren Ausführung kann das Lüfterrad oder die Lüfterradnabe aus nicht magnetischem Material, z.B. Aluminium, bestehen, wobei eine zusätzliche Hülse entfällt. Andererseits kann das Lüfterrad aus Kunststoff ausgeführt werden, wobei in die Kunststoffnabe eine elektrisch leitfähige Hülse, z.B. Kupferhülse, eingesetzt wird. Bei diesen Ausführungen ist eine Gewichtsreduzierung möglich, was für mit hohen Drehzahlen arbeitende Antriebe wichtig ist.

Eine weitere Ausführung zeichnet sich nach der Erfindung dadurch aus, daß für einen Antrieb mit kleiner axialer Baulänge die Teile der elektromagnetischen Schlupfkupplung (Magnete und Käfig) nicht koaxial, sondern radial (Scheibenläuferprinzip) zur Motorwelle angeordnet sind.

Gemäß der Erfindung kann die elektromagnetische Schlupfkupplung so ausgebildet sein, daß die Mitte der Magnete und des Käfigs axial versetzt sind, so daß eine axiale Kraftkomponente erzeugt wird, die auf die Lüfterradlagerung wirkt und eine Taumelbewegung verhindert. Hierbei ist eine Lüfterradlagerung nur mit einem Lager, z.B. einem zweireihigen Lager oder einer Lagerungseinheit, zwischen dem Motorgehäuse bzw. Motorlagerschild und dem Lüfterrad ausführbar.

Die Erfindung umfaßt ferner eine Ausführung gemäß Anspruch 8, deren elektromagnetische Schlupfkupplung nach dem Reluktanzprinzip arbeitet, wobei die Schlupfkupplungsteile auch ohne Käfigwicklung oder Kupferhülse ausführbar sind.

Bei der Ausbildung des elektromagnetischen Teils der Schlupfkupplung sind des weiteren Permanentmagnetpaare durch einen oder mehrere Stabmagnete ersetzbar, welche beispielsweise in Querbohrungen der Motorwelle bzw. in Bohrungen des Lüfterrades einsetzbar sind. Dabei können resultierende Fliehkräfte auf die Magnete vermieden werden und es ist eine einfache Befestigung und Fixierung der Stabmagnete möglich.

Vorteilhafte Ausgestaltungen der Erfindung sind in den weiteren Patentansprüchen angegeben.

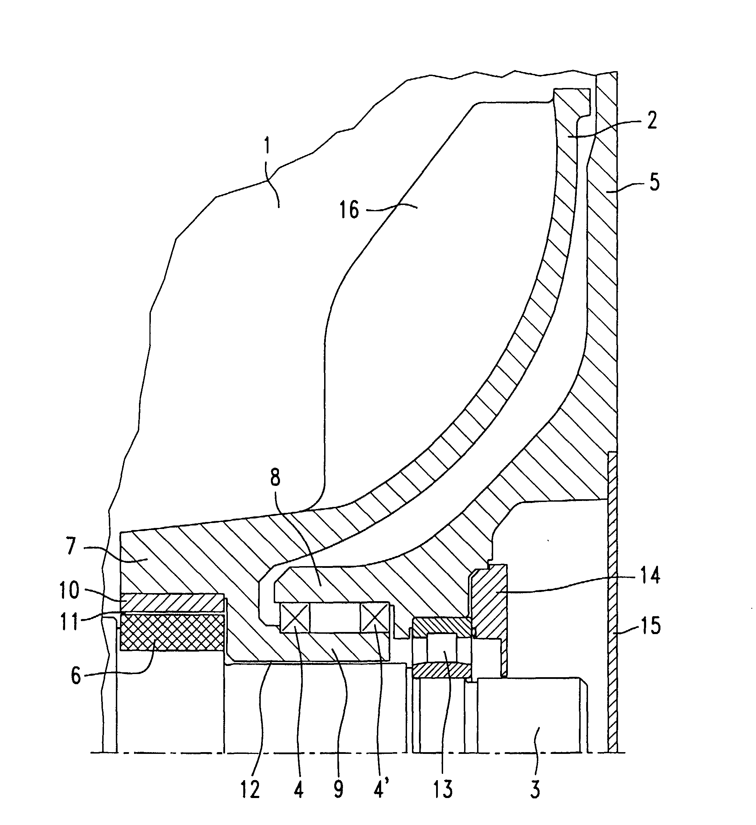

Die Erfindung wird im folgenden an einem Ausführungsbeispiel unter Hinweis auf die Zeichnung erläutert, die einen Teilschnitt durch einen erfindungsgemäßen elektromotorischen Antrieb zeigt, wie er insbesondere für mit hohen Drehzahlen betreibbare Drehstrom-Bahnmotoren geeignet ist.

Von einem an sich bekannten Elektromotor 1 sind vom Motorgehäuse 5 ein Motorlagerschild und ein Motorgehäusedeckel 15, ferner eine Motorwelle 3, ein Motorwellenlager 13, ein Motorwellenlagerdeckel 14 sowie ein Lüfterrad 2 mit einem Lüfterradflügel 16 dargestellt. Nach dem gezeichneten Ausführungsbeispiel ist das Lüfterrad 2 über seine Lüfterradnabe 7 in koaxialer Anordnung zur Motorwelle 3 im Motorgehäuse 5 bzw. im Motorlagerschild frei drehbar gelagert. Die in der dargestellten Ausführung aus zwei Lagern 4, 4' bestehende Lagerung des Lüfterrades 2 sitzt mit ihrem still stehenden Lageraußenring in einer Lageraufnahme 8 des Motorgehäuses 5 bzw. des Motorlagerschildes, wobei sich eine ringförmige Anformung 9 der Lüfterradnabe 7 gegen den drehenden Lagerinnenring des Lüfterradlagers 4, 4' abstützt. Die Lagerung des Lüfterrades kann z.B. wie dargestellt aus zwei Lagern 4, 4' oder einem zweireihigen Lager bzw. einer Lagerungseinheit mit den Lagerreihen 4, 4' bestehen. Der Lagerung wird ferner eine nicht dargestellte, an sich bekannte axiale Fixierung zugeordnet.

Zwischen dem frei drehbar gelagerten Lüfterrad 2 und der Motorwelle 3 befindet sich eine elektromagnetische Drehzahlbegrenzungs- und -Regeleinrichtung für das Kühlluftgebläse. Die als elektromagnetische Schlupfkupplung ausgelegte Einrichtung wirkt in der Weise, daß mit steigender Motordrehzahl, insbesondere ab einem bestimmten Drehzahlbereich, über die Schlupfkupplung die Antriebswirkung auf das Lüfterrad abnimmt. Andererseits bewirkt die Schlupfkupplung bei einer unter einen bestimmten Drehzahlbereich abfallenden Motordrehzahl, daß die Antriebswirkung der Kupplung auf das Lüfterrad wieder zunimmt. Die durch einen vorgebbaren Luftspalt 11 getrennten Teile 6, 10 der elektromagnetischen Schlupfkupplung werden von Magneten 6 bzw. einem Käfig 10 gebildet.

Im gezeichneten Ausführungsbeispiel trägt die Motorwelle 3 Permanentmagnete 6, während das Lüfterrad 2 bzw. die Lüfterradnabe 7 mit einer oder mehreren Kurzschluß- oder Käfigwicklungen 10 bestückt ist. In der Ausführung besteht der Käfig 10 aus einer Kupferhülse, die in die Nabe 7 beispielsweise eines Kunststoff-Lüfterrades 2 einsetzbar ist. Mit 12 ist ein Luftspalt zwischen der Lageranformung 9 der Lüfterradnabe und der Motorwelle 3 bezeichnet.

Gemäß einem nicht dargestellten Ausführungsbeispiel können die Permanentmagnete auch am Lüfterrad und das elektrische Teil 10 des Käfigs an der Motorwelle angeordnet sein. Die magnetische Erregung der Schlupfkupplung erfolgt über die Permanentmagnete und aufgrund der Drehung der Motorwelle 3 bzw. des Lüfterrades 2. Das zur Mitnahme des Lüfterrades erforderliche Drehmoment entsteht durch Induzierung einer elektrischen Spannung im Käfig 10 in gleicher prinzipieller Art wie bei einer Asynchronmaschine mit Käfigläufer. Die Anordnung ist insbesondere so bemessen, daß - abgesehen von eventuellen Reaktionsmomenten - das maximale Moment (Kippmoment) bei einer vorgegebenen Drehzahl erreicht wird, bei der es zur Überwindung des Druckabfalles des aerodynamischen Kreises gerade ausreicht. Diese Drehzahl wird im allgemeinen zwischen 50 und 75 % der höchsten Motordrehzahl liegen. Steigt nun die Motordrehzahl über diesen Wert, so stellt sich aufgrund der Drehmoment-Schlupf-Kennlinie der Kupplung für das Lüfterrad eine niedrigere Drehzahl ein, wodurch Kühlluftmenge, Energieaufwand und Geräusch des Lüfters sinken.

## Patentansprüche

1. Elektromotorischer Antrieb mit wenigstens einem von einem Elektromotor (1) antreibbaren Lüfterrad (2),
- wobei eine von der Motordrehzahl abhängige elektromagnetische Schlupfkupplung zwischen der Motorwelle (3) und dem frei drehbar gelagerten Lüfterrad angeordnet ist,
- wobei eine elektromagnetische Drehzahlbegrenzungs- und Regelungseinrichtung zwischen der Motorwelle (3) und dem Lüfterrad (2) vorgesehen ist, welche die Kühlluftförderung auf die erforderliche Kühlluftmenge begrenzt,
- wobei ab einer vorgebbaren Motordrehzahl die Lüfterraddrehzahl gegenüber der Motordrehzahl reduzierbar ist, derart, daß die Mitnahmewirkung der Schlupfkupplung mit steigender Drehzahl der Motorwelle bis beinahe zur Wirkungslosigkeit aufhebbar ist und bei abfallender Motordrehzahl wieder bis auf die volle Mitnahmewirkung zunimmt,
- wobei das Lüfterrad (2) über eine Lagerung (4, 4') frei drehbar am Motorgehäuse (5) gelagert ist und
- wobei die Motorwelle (3) Permanentmagnete (6) trägt und die Nabe (7) des Lüfterrades (2) ein elektrisch leitfähiges Teil aufweist oder das Lüfterrad mit Permanentmagneten und die Motorwelle mit einem elektrisch leitfähigen Teil versehen ist.

2. Elektromotorischer Antrieb nach Anspruch 1, **dadurch gekennzeichnet**, daß das Lüfterrad (2) in einem Motorlagerschild des Motorgehäuses (5) gelagert ist.

3. Elektromotorischer Antrieb nach Anspruch 1 oder 2, **dadurch gekennzeichnet**, daß die Lagerung (4, 4') des Lüfterrades (2) mit einem Lageraußenring in einer Lageraufnahme (8) des Motorgehäuses (5) oder Motorlagerschildes sitzt und sich eine ringförmige Anformung (9) der Lüfterradnabe (7) gegen den drehenden Lagerinnenring des Lüfterradlagers (4, 4') abstützt.

4. Elektromotorischer Antrieb nach Anspruch 1, **dadurch gekennzeichnet**, daß das mit den Permanentmagneten (6) der Motorwelle (3) oder des Lüfterrades (2) die elektromagnetische Schlupfkupplung bildende elektrisch leitende Teil des Lüfterrades oder der Motorwelle aus einer Hülse (10) aus elektrisch leitfähigem Material, wie einer Kupferhülse, besteht.

5. Elektromotorischer Antrieb nach einem der Ansprüche 1 bis 4, **dadurch gekennzeichnet**, daß die Permanentmagnete (6) und/oder die Hülse (10) ringförmig oder abschnittsweise ringförmig an der Nabe (7) des Lüfterrades (2) oder an der Motorwelle (3) angeordnet sind.

6. Elektromotorischer Antrieb nach einem der Ansprüche 1 bis 5, **dadurch gekennzeichnet**, daß das Lüfterrad (2) eine Nabe (7) aus nicht-magnetischem Material, wie Aluminium, aufweist oder daß das Lüfterrad aus Kunststoff besteht und in die Lüfterradnabe eine Hülse (10) aus elektrisch leitfähigem Material eingesetzt ist.

7. Elektromotorischer Antrieb nach einem der Ansprüche 1 bis 6, **dadurch gekennzeichnet**, daß die Teile der elektromagnetischen Schlupfkupplung (6, 10) in koaxialer oder in radialer Anordnung zur Motorwelle (3) angeordnet sind.

8. Elektromotorischer Antrieb nach einem der Ansprüche 1 bis 7, **dadurch gekennzeichnet**, daß die Motorwelle Permanentmagnete trägt und in der Nabe des Lüfterrades Segmente ausgespart sind oder daß das Lüfterrad mit Permanentmagneten versehen ist und die Motorwelle über ihren Umfang segmentartige Aussparungen aufweist, derart, daß im Zusammenwirken der segmentierten Lüfterradnabe mit den Permanentmagneten der Motorwelle bzw. im Zusammenwirken der segmentierten Motorwelle mit den Permanentmagneten des Lüfterrades und abhängig von der Motordrehzahl die Drehzahlbegrenzungs- und Regelungseinrichtung wirksam ist.

9. Elektromotorischer Antrieb nach einem der Ansprüche 1 bis 7, d**adurch gekennzeichnet**, daß die Mitte der Permanentmagnete des einen Teils der Schlupfkupplung gegenüber der Mitte des einen Käfig bildenden anderen Teils der Schlupfkupplung axial versetzt ist.

10. Elektromotorischer Antrieb nach Anspruch 9, **dadurch gekennzeichnet**, daß die Lagerung des Lüfterrades im Motorgehäuse oder im Motorlagerschild aus einem einzigen Lager besteht.

11. Elektromotorischer Antrieb nach einem der Ansprüche 1 bis 10, **dadurch gekennzeichnet**, daß das eine Teil der Schlupfkupplung aus einem oder mehreren in Bohrungen der Motorwelle oder in Bohrungen des Lüfterrades eingesetzten Stabmagneten besteht.

12. Elektromotorischer Antrieb nach einem der Ansprüche 1 bis 11, **dadurch gekennzeichnet,** daß wenigstens ein Lüfterrad (2) für gekapselte oder durchzugsbelüftete Elektromotoren (1) für Schienenfahrzeuge und spurgebundene Fahrzeuge für Saug- oder Druckbelüftung an wenigstens einem Motorlagerschild (5) frei gelagert und ausgebildet ist.

13. Elektromotorischer Antrieb nach einem der Ansprüche 1 bis 12, **dadurch gekennzeichnet**, daß die Teile der elektromagnetischen Schlupfkupplung (6, 10) so bemessen sind, daß das maximale Kippmoment bzw. die höchste Mitnahmewirkung zwischen der Motorwelle (3) und dem Lüfterrad (2) bei einer vorgegebenen Motordrehzahl erreicht wird, die zur Überwindung des Druckabfalles des aerodynamischen Kreises ausreicht

14. Elektromotorischer Antrieb nach einem oder mehreren der Ansprüche 1 bis 13, **dadurch gekennzeichnet,** daß er für mit hohen Drehzahlen betreibbare Drehstrom-Bahnmotoren vorgesehen ist.
